**Europäisches Patentamt**

(19) **European Patent Office**

**Office européen des brevets**

(11) Publication number: **0 213 086**
**B1**

(12) # EUROPEAN PATENT SPECIFICATION

(45) Date of publication of the patent specification:
**12.04.89**

(51) Int. Cl.⁴: **B 65 G 13/06,** B 65 G 47/26

(21) Application number: **86830198.7**

(22) Date of filing: **11.07.86**

(54) A power-driven roller conveyor for the embodiment of supply lanes with holding stations.

(30) Priority: **12.07.85 IT 350185**

(43) Date of publication of application:
**04.03.87 Bulletin 87/10**

(45) Publication of the grant of the patent:
**12.04.89 Bulletin 89/15**

(84) Designated Contracting States:
**BE CH DE FR GB LI NL**

(56) References cited:
**EP-A- 0 034 131**
**AT-B- 344 599**
**US-A- 3 327 837**

(73) Proprietor: **DUGOMRULLI S.r.l., Via Ippolito Nievo, 8,**
**I-40069 Zola Predosa (Bologna) (IT)**

(72) Inventor: **Nipoti, Mario, Via Sabotino, 10,**
**I-40131 Bologna (IT)**

(74) Representative: **Lanzoni, Luciano, c/o BUGNION S.p.A.**
**Via Farini, 37, I-40124 Bologna (IT)**

ACTORUM AG

## Description

The invention relates to a power-driven roller conveyor designed to enable the construction of supply lanes with holding stations.

In a great many instances, modern automatic machines are supplied with work by way of belt or roller conveyors arranged so as to create lanes along which material is fed to the work area.

In roller conveyors, the rollers may revolve freely as long as one has a continuous down-gradient and the load carried can be propelled along under its own weight; in all other situations, a power transmission is utilized.

Such rollers generally consist of a central shaft attached to the longitudinal members of the conveyor frame, and a tube ensheathing the shaft, associated coaxially therewith at each end, and integral with a sprocket that engages with a drive chain.

A roller of this type is known from e.g. EP-A-34 131.

The need often arises in applications of the type to slow down the rate at which items are fed to the machine, and a requirement thus exists for holding stations near to the destination.

Holding stations are usually created by employing a clutch-coupled type of roller, that is, a roller in which a second, external tube ensheaths and engages in frictional contact with the driven roller, thereby generating frictional torque proportional to the weight of the load, and causing the load itself to travel forward at the surface speed of the conveyor.

The load is stopped in a given position either by placing an obstacle in its path, such as a barrier, or by its running up against the item preceding it on the conveyor and already at a standstill; with movement of the load inhibited, the internal tube of each roller continues turning nonetheless by virtue of its being clutch-coupled to the external tube.

The instant that the obstacle is removed, say, by lowering the barrier beneath the level of the bed of rollers, the load can once again move forward until such time as a further obstacle is encountered.

Conveyors of the type in question are beset by the drawback of producing considerable thrust resulting from shock occasioned when a load is driven either against the item in front, or against the barrier.

This is a problem defeated by embodying the power-driven conveyor with mechanical couplers that disengage the rollers from the drive system. Operation of such couplers is triggered directly by the load when coming up against a check; the moment that the load makes contact with the check, the rollers of that particular station are disengaged, and movement of the load ceases. The thrust problem is eliminated with this type of design, though the conveyor itself is somewhat complex in construction.

A further drawback encountered with conveyors having mechanically coupled rollers is that the load must be of given weight to ensure disconnection of the drive, due to the fact that the coupling mechanism requires a certain minimum force for its operation. Accordingly, the object of the invention is that of overcoming the drawbacks described above.

The stated object is achieved with a power-driven roller conveyor as characterized in the appended claims; such a conveyor operates noiselessly, and is capable of bringing single items of a conveyed load to a standstill regardless of weight considerations.

One of the advantages gained with a conveyor according to the invention consists essentially in steady, smooth and noiseless operation obtained by adoption of an embodiment of the rollers in which the driving member, a sprocket, is coupled to the driven member, the rolling tube, by way of a helical catch spring.

With an embodiment of the type there is no shock occasioned by the heavy impact of colliding weights, since engagement and disengagement are brought about simply by freeing and marginally lifting one end of the spring. Stop and start operations are rendered still smoother by adoption of a radial clutch coupling arrangement between a journal boss integral with the sprocket, and the rolling tube.

A further advantage provided by the invention is that particularly lightweight items can be conveyed into and detained at the holding stations, since the spring can be disengaged by application of the very lightest of mechanical forces. In the conveyor disclosed, disengagement of drive is ensured effective by virtue of the fact that detent mechanisms used to disconnect the rollers of the various holding stations are operated by mechanical or electromagnetic components which can be triggered by a transducer, say, a photocell, requiring no force whatever for its excitation, or actuated by the control circuits of the machine into which the roller conveyor is integrated.

Another advantage of a conveyor according to the invention is that of economy in construction gained by reducing the diameter of each cylindrical roller tube at the end where the drive gear is located, and providing the relative journal boss with a folded lip that ensheaths and makes direct contact with the narrowed end section. A tube of this design permits of a wide range of alternative embodiments, namely, the outside diameter of the folded lip of the journal boss may match that of the adjacent sprocket hub so that a spring may be wound around both components; alternatively, the spring may be dispensed with, and the folded lip and the hub of the sprocket ensheathed by a collar with dogs that engage in corresponding recesses in the sprocket to the end of providing a rigid coupling; again, the journal boss might be clutch-coupled radially to the narrow end section of the tube, or cemented, keyed or otherwise attached thereto.

Yet another advantage of a conveyor according to the invention is that cylindrical rollers of identical length may be employed throughout, bends included, and holding stations may be created even at the location of a bend by utilizing clutch-coupled sleeves that engage the single rollers via relative radial friction surfaces and revolve independently of one another. Such an advantage is markedly important, especially in conveyor systems such as are used for bottles, where diversions are used to supply flow tables or in-process stock facilities.

The invention will now be described in detail, by way of example, with the aid of the accompanying drawings, in which:

fig. 1 is the schematic representation of a right angle bend, seen in plan, in a stretch of conveyor according to the invention;

fig. 2 is the cross section of a conveyor according to the invention;

fig. 3 is the axial section through a power-driven roller forming part of a conveyor as in figs. 1 & 2;

fig. 4 is the section through IV-IV in fig. 2, seen in cutaway;

fig. 5 is the axial section through an alternative embodiment of the power-driven roller in fig. 3;

fig. 6 is the axial section through a further alternative embodiment of the power-driven roller in fig. 3;

fig. 7 is the section through VII-VII in fig. 8;

fig. 8 is the side elevation of a mechanical type of detent mechanism that might be incorporated into a conveyor according to the invention.

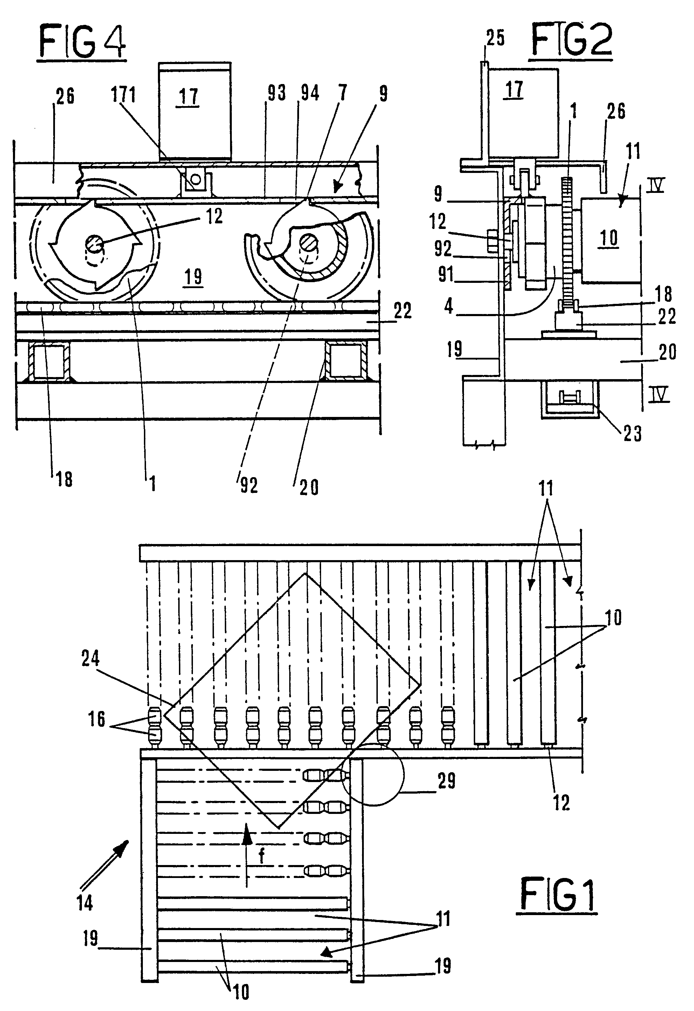

Referring to figs. 1 & 2 of the drawings, 14 denotes a straight stretch of conveyor, consisting of a pair of longitudinal members 19 interconnected by cross members 20, and a set of power-driven rollers 11.

The height of the conveyor surface created by the crests of the rollers is established by a set of legs 21 attached to the longitudinal members 19.

The rollers 11 are driven by a chain loop 18, set in motion by a motor (not illustrated), the top branch of which is supported by a track 22 made fast to the top of the cross members, and the bottom branch by a further track or a runner 23 made fast to the bottom of the cross members 20.

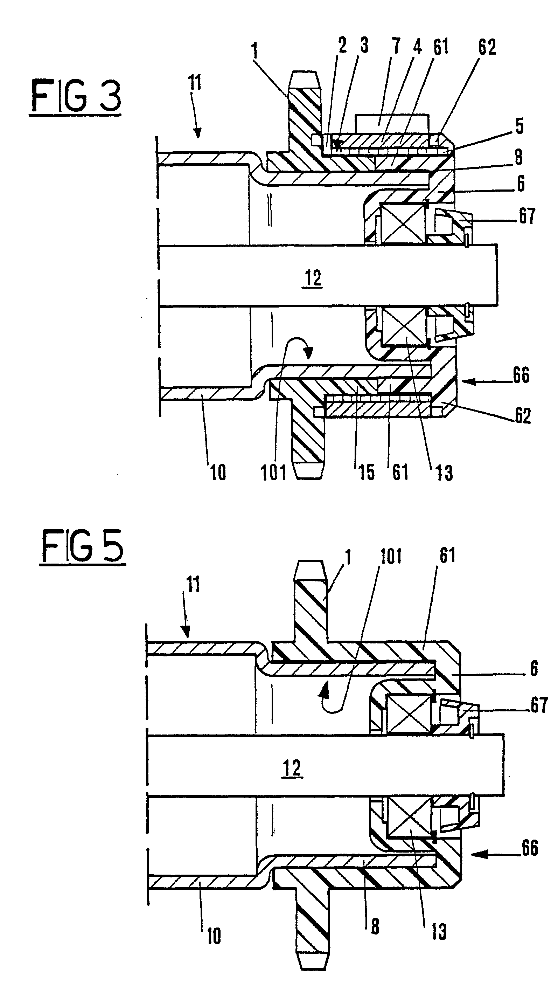

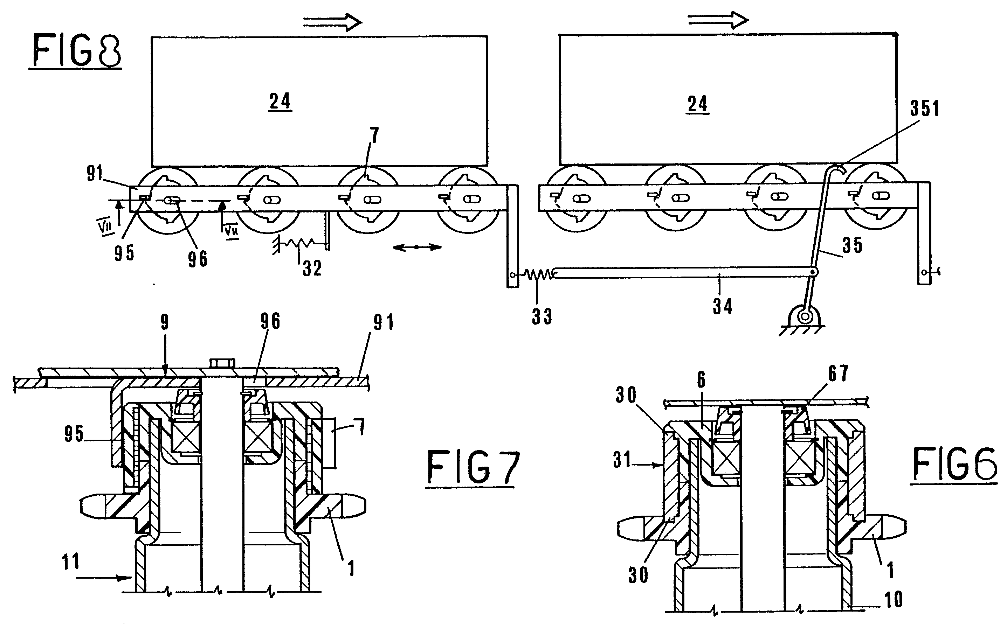

Each roller 11 consists of a shaft 12 connected at either end to the longitudinal members 19, and a tube 10 mounted rotatably to and coaxial with the shaft by way of a journal boss 6 at either end (see figs 3 and 5); the bosses 6 are integral, in the example illustrated, with rolling bearings 13.

1 denotes a sprocket fitted over one end of each of the roller tubes 10, which meshes with the chain 18 at bottom, as in conventional embodiments. The set of sprockets 1 is protected uppermost by a guard 26 fitted to the longitudinal member 19 alongside.

According to the invention, one end of the tube 10 of each roller 11, more exactly, the end denoted 101 which carries the sprocket 1, exhibits a cylindrical section of reduced diameter, and the lip 61 of the corresponding journal boss 66 inserted thereinto is folded down into direct contact with the outer surface of the cylindrical end section 101.

The outside diameter of the folded lip 61 of the boss 66 matches the outside diameter of the hub 15 of the sprocket 1, and both components are ensheathed by a helical catch spring 3. The sprocket 1 is slid over the end section 101 of the tube 10 and remains free to rotate in relation thereto.

The spring 3 is wound in the same direction as that in which the sprocket 1 rotates when drawn by the chain 18, so that rotation will tighten it both against the hub 15 of the sprocket and against the folded lip 61 of the journal boss 66.

4 denotes a catch collar ensheathing the spring 3, which is located adjacent to the sprocket 1 and provided with a slot in which the corresponding end 2 of the spring is seated. By rotating the collar 4 in the opposite direction to that of the sprocket 1, or simply holding the collar stationary while the chain sprocket continues rotating, one produces the effect of slackening the spring 3 and separating it from the hub 15 of the sprocket and the folded lip 61 of the journal boss 66.

7 denotes at least one tooth carried by the collar 4 (the example of fig. 4 shows four such teeth), the working surface of which faces in the direction of rotation of the sprocket 1, hence of the roller 11.

The folded lip 61 of the journal boss 66 will best be associated with the narrow end section 101 of the tube 10 by way of radial clutch 8, in which case the remaining end of the helical spring 3, denoted 5 (see fig. 3), will engage in a corresponding slot in a rim 62 extending from the journal boss 66 for the purpose of inhibiting axial shift of the collar 4.

Alternatively, the folded lip 61 of the boss 66 may be cemented, keyed or otherwise paired with the end section 101 of the tube, in which instance the end of the spring denoted 5 will remain unanchored, embodied, that is, without a catch hook.

9 denotes a detent mechanism mounted to one of the longitudinal members 19 (see figs. 2 & 4), serving to disengage the helical catch springs 3; one such detent 9 will be provided for each holding station to be created. The mechanism consists essentially in a profiled or flat plate 91 with slots 92 and catch teeth 94, and is designed to operate such that the catch teeth 94 will shift through a radial path in relation to the rollers 11, either vertically (as in figs. 2 and 4), or horizontally (as in figs. 7 and 8) or at an angle. In the preferred embodiment of figs. 2 and 4, each detent 9 is embodied substantially as an upturned L the longitudinal dimension of which matches the length of the relative holding station.

The upright section 91 of each detent 9 exhibits a set of vertical slots 92 in which the shafts 12 of the rollers 11 occupying the relative station are made to locate; the shafts 12 thus serve as guides for the detent mechanism 9. The horizontal section 93 of the detent, on the other hand, exhibits a set of rectangular catch slots 94, equal in number to the vertical slots 92, each one of which offers a surface to the teeth 7 of a relative catch collar 4 that coincides substantially with the longitudinal axis of the relative vertical slot 92.

The upright section 91 of the detent mechanism 9 is accommodated slidably between the longitudinal conveyor member 19 and a distance piece 67 integral with each of the rollers 11, and can be raised and lowered by means consisting, for instance, of at least one electromagnet 17 mounted to a bracket 25 fitted to the longitudinal member 19, and attached via the bottom end of its core 171 to the horizontal section 93 of the detent 9.

The electromagnet 17 can be interlocked to a transducer that detects proximity of single items of the load 24 occupying the station, or to the control circuits of the machine into which the conveyor 14 happens to be integrated.

Stop and subsequent restart of the load 24 at each holding station in a power-driven roller conveyor 14 thus embodied occurs as follows.

With the load moving, the excited electromagnet 17 retains the detent mechanism 9 in raised position, allowing the catch collars 4 to rotate together with their relative sprockets 1, such that each spring 3 is tightened against the hub 15 of the sprocket and against the folded lip 61 of the journal boss 66.

In receipt thus of drive from the sprocket 1 by way of the catch spring 3, the single journal boss 66 transmits rotation via the radial clutch 8 to the relative tube 10, and one or more items of the load 24 will duly move along the rollers.

On disexcitation of the electromagnet 17, which may be triggered by the transducer or control circuits aforementioned , or both, the detent mechanism 9 will descend under its own weight, whereupon one of the teeth 7 of each catch collar 4 is engaged and held by the corresponding surface of a relative slot 94.

The spring 3 now slackens to the point of disengaging from the sprocket 1, with the result that the tube 10 is no longer turned by the sprocket despite the fact that the sprocket continues to be driven by the chain 18. In an embodiment where the remaining end 5 of the spring 3 is unanchored, -i.e. without a catch hook, the tube 10 will continue to rotate for a given space before stopping, due to inertia, without any braking action being applied to the load 24.

With the end 5 of the spring 3 anchored in the rim of a boss 66 as in fig. 3, on the other hand, one has a gradual braking action produced by friction generated through the radial clutch 8, since the journal boss 66 is associated permanently with the catch collar 4, hence motionless.

Forward movement of the load is restored simply by re-exciting the electromagnet 17, so as to raise the detent mechanism 9 and free the catch collars 4.

The electromagnet 17 may equally well be installed in a position upturned with respect to that illustrated in figs. 2 & 4, mounted to the underside of the conveyor, or again, in a position such as to operate horizontally with a spring return.

With the catch collars 4 free to turn, the springs 3 engage immediately and cause the journal bosses 66 to turn with the sprockets 1. Where the folded lip 61 of the boss 66 is fitted loosely to the narrow end section 101 of the tube 10 and the end 5 of the catch spring 3 remains unanchored, rotation of the tubes 10 will be restored noiselessly, but jerkily, whereas in the embodiment incorporating the radial clutch 8, a more progressive pick-up is obtained.

In a further embodiment according to the invention, illustrated in fig. 5, the folded lip 61 of the journal boss 66 completely ensheaths the narrowed end section 101 of the roller and is integral with the sprocket 1. The boss 66 and the tube 10 may either associate by way of the radial clutch 8 aforesaid, or be cemented, keyed or otherwise attached, and depending upon the method of fitment adopted, the roller 11 will function either as a clutch-coupled or a permanently driven member.

A further embodiment of the rollers is illustrated in fig. 1, which shows two successive stretches of conveyor 14 arranged at an angle, in this case 90°, and having tubes 10 that exhibit constant diameter.

16 denotes a sleeve which is clutch-coupled to each single tube 10, and rotatable independently of the remaining sleeves 16. Additional rollers 11 without sleeves 16, but of overall length matching that of the clutch coupled rollers, are located at the entry and the exit end of the two stretches of conveyor 14 forming the bend; also, it will be observed that the exit of the upstream stretch (see direction f) connects full width with the stretch immediately down-stream.

With a conveyor 14 thus embodied, a single item of the load 24 is able to steer around a cylindrical, vertical post 29 positioned at the inside corner of the bend, a manœuvre made possible by the fact that the sleeves 16 can rotate at dissimilar speed one in relation to the others, clutch-coupled radially as they are to the relative tubes 10. It will be clear enough that cylindrical rollers such as these having clutch-coupled sleeves 16 might be utilized to form a progressive bend, or in stretches of conveyor arranged at an angle other than that shown in fig. 1.

In fig. 6, the sprocket 1 is coupled permanently to the journal boss 66 by way of a toothed arrangement, with opposed recesses provided in the sprocket and in the rim 62 of the boss that accommodate dogs 30 issuing from a collar 31 ensheathing both the hub 15 of the sprocket and the folded lip 61 of the boss.

In fig. 8, the detent system 9 operates entirely by mechanical means, and consists of a single plate 91 disposed in a vertical plane which is provided with horizontal slots 96, and similarly horizontal catch pins 95 which engage the teeth 7 of the collars 4; such pins could simply be punched from the plate.

The detent mechanism 9 in this embodiment is made to shift horizontally, with the pins 95 moving through a direction that coincides substantially with the horizontal diameter of the rollers 11. The plate 91 is connected to a retaining spring 32 that keeps the catch pins 95 outside the trajectory described by the teeth 7 of the collars 4, as well as to a spring denoted 33, which connects in its turn with a link rod 34 pivotably attached to the intermediate part of a lever 35. The lever 35 itself is pivoted at its bottom end and raked forward in the direction of movement of the conveyor, its top end 351 bent over and projecting upward between two of the rollers 11 occupying the next holding station downstream from that which the linked detent mechanism 9 controls; thus, a item of the load 24 arriving at a given holding station stops those rollers 11 forming part of the station next upstream. A single item of the load 24 need exert only such force as is necessary to overcome the bias of the two springs 32 and 33, a force reduced still further thanks to the advantage given by the lever 35.

The second spring 33 is provided to the end of rendering operation of the detent 9 that much smoother, especially if engaged at the precise moment when the teeth 7 of the catch collars 4 happen to be lying in alignment with the pins 95.

## Claims

1. A power-driven roller conveyor for the embodiment of supply lanes with holding stations, each roller (11) of which comprises a shaft (12), a cylindrical tube (10) ensheathing the shaft and journalled thereto by way of bosses (6) accommodating bearings (13), and a sprocket (1) fitted over one end of the tube and turned by a drive chain (18), characterized in that each roller is provided with a helical catch spring (3) that ensheaths both the hub (15) of the sprocket and a cylindrical element (61) equal in diameter to the hub and turning as one with the tube, and with a collar (4), ensheathing and controlling operation of the spring, that exhibits at least one tooth (7) facing in the direction of rotation of the sprocket and offers a slot in which one end (2) of the spring may locate;

in that the sprocket is freely rotatable in relation to the tube, and the helical spring is wound in the direction of rotation of the sprocket (1) such that rotation of sprocket and collar (4) will engage the spring;

and in that it comprises a detent (9) which, when operated, shifts from a position outside of the trajectory described by the teeth (7) of the collar (4) to a position, within the same trajectory, such as will disengage the spring (3).

2. Power-driven roller conveyor as in claim 1, wherein the journal bosses (6) are inserted into the single roller (11), and at least the one boss (66) nearest the sprocket (1) exhibits a lip (61) folded into a position parallel with the boss itself, the purpose of which is to ensheath the relative end section (101) of the tube in a direct fit, and wherein the outside diameter of the folded lip matches that of the sprocket hub (15) and the folded lip itself constitutes the cylindrical element (61) around which the helical catch spring (3) is wound.

3. Power-driven roller conveyor as in claim 2, wherein the journal boss (66) and the tube (10) of the single roller are coupled by way of radial friction surfaces (8).

4. Power-driven roller conveyor as in claim 3, wherein the end (5) of the helical catch spring (3) farthest from the sprocket engages in a slot offered by the journal boss (6).

5. Power-driven roller conveyor as in claim 1, wherein the cylindrical end section of the tube exhibiting reduced diameter is that ensheathed by the sprocket (1) and the folded lip (61) of the relative journal boss (66).

6. Power-driven roller conveyor as in claim 1, wherein the single roller (11) comprises at least one sleeve (16) that is clutch-coupled to a tube (10) of substantially constant section by way of radial friction surfaces.

7. Power-driven roller conveyor as in claim 1, comprising at least two stretches arranged at an angle one with the other, all rollers (11) of which are cylindrical and of identical length, wherein each roller in the vicinity of the join between the two differently disposed stretches consists of a tube (10) of substantially constant section, and a plurality of clutch-coupled sleeves (16) that exhibit identical outside diameter and ensheath the tube in a fit employing respective radial friction surfaces.

8. Power-driven roller conveyor as in claim 7, the successive stretches of which are arranged at an angle of 90° or thereabouts, wherein the upstream of two stretches thus arranged connects across its full width with the stretch immediately downstream.

9. Power-driven roller conveyor as in claim 7, successive stretches of which are arranged at an angle one with the other and interconnected by a bend, wherein all rollers (11) of such a bend are cylindrical and of identical length, and consist of a tube (10) of substantially constant section, and a plurality of clutch-coupled sleeves (16) that exhibit identical outside diameter and ensheath the tube in a fit employing respective radial friction surfaces.

10. Power-driven roller conveyor as in claim 1, wherein the collar (4) controlling operation of the helical catch spring (3) of each roller is provided with at least four teeth (7).

11. Power-driven roller conveyor as in claim 1, each of the holding stations of which is fitted with a detent mechanism (9) of length substantially equal to that of the station itself, wherein the detent is embodied as a vertically disposed plate (91) provided with vertical slots (92) accommodating the shafts (12) of the single rollers (11), and with catches (94 or 95) that engage the teeth (7) of the collars (4) controlling the springs (3) whenever the mechanism is shifted by suitable actuator means (17) into the position whereby roller drive is disconnected.

12. Power-driven roller conveyor as in claim 11, wherein the catches of the detent mechanism (9) are provided by the edges of slots (94) located in a horizontal section (93) created by bending the upright section of the vertically disposed plate (91) through 90°.

13. Power-driven roller conveyor as in claim 11, wherein the catches of the detent mechanism (9) take the form of pins (95) projecting from the vertically disposed plate (91).

14. Power-driven roller conveyor as in claim 1, each of the holding stations of which is fitted with a detent mechanism (9) of length substantially equal to that of the station itself, wherein the detent is embodied as a vertically disposed plate (91) provided with vertical slots (92) accommodating the shafts (12) of the single rollers (11), and with catch pins (95) that engage the teeth (7) of the collars (4) controlling the springs (3) whenever the mechanism is shifted by suitable actuator means (17 or 35, 34 & 33) into the position whereby roller drive is disconnected, and wherein the detent mechanism (9) is biased by a retaining spring (32) into the position whereby roller drive is freely transmitted.

15. Power-driven roller conveyor as in claim 11 or 14, wherein the actuator means operating each detent mechanism (9) consist in at least one electromagnet (17) interlocked to the control equipment of the machine into which the conveyor is integrated.

16. Power-driven roller conveyor as in claim 11 or 14, wherein the actuator means operating each detent mechanism (9) consist in at least one electromagnet (17) interlocked to a transducer designed to detect proximity of the load (24) conveyed into the holding station.

17. Power-driven roller conveyor as in claim 11 or 14, wherein the actuator means operating each detent mechanism (9) consist in a lever (35) raked forward in the direction of movement of the conveyor and pivotably attached to a link rod (34) that connects by way of a spring (33) with the vertically disposed plate (91), and wherein the top end (351) of such a lever is bent over and projects upward between two of the rollers (11) occupying the holding station next downstream from that which the detent mechanism (9) controls.

18. Power-driven roller conveyor as in claim 2, wherein the journal boss (66) of each roller (11) is attached to the narrowed end section (101) of the tube (10) by way of a cement or adhesive compound.

19. Power-driven roller conveyor as in claim 2, wherein the journal boss (66) of each roller (11) is attached to the narrowed end section (101) of the tube (10) by way of a keyed or other positive fit.

## Patentansprüche

1. Förderer mit angetriebenen Rollen für Zulieferbahnen mit Haltestationen, von denen jede Rolle (11) eine Welle (12) enthält, ein auf die Welle aufgezogenes zylindrisches Rohr (10), das an dieser durch einen ein Lager (13) tragenden Nabenkranz (6) befestigt ist, sowie einen Zahnkranz (1), der auf das eine Ende des Rohres aufgezogen ist und durch eine Antriebskette (18) zum Drehen gebracht wird, dadurch gekennzeichnet, dass an jeder Rolle eine Schraubenfeder (3) vorgesehen ist, aufgezogen auf die Nabe (15) des Zahnkranzes und auf ein zylindrisches Element (61), das den gleichen Durchmesser aufweist wie die Nabe und sich in einem mit dem Rohr dreht, sowie eine aufgezogene Manschette (4), welche die Federwirkung kontrolliert und mit wenigstens einem der Drehrichtung des Zahnkranzes zugewandten Zahn (7) versehen ist und einen Sitz bietet, in den sich ein Ende (2) der Feder einfügt;

dadurch, dass der Zahnkranz im Verhältnis zu dem Rohr frei drehbar ist, und dass die Schraubenfeder in der Drehrichtung des Zahnkranzes (1) gewunden ist, so dass bei der Umdrehung des Zahnkranzes und der Manschette (4) die Feder gegriffen wird; und dadurch, dass ein Anschlag (9) vorgesehen ist, der sich im Betrieb von einer ausserhalb der durch die Zähne (7) der Manschette (4) beschriebenen Bahn liegenden Position in eine Position innerhalb derselben Bahn bewegt, so dass er die Feder (3) freigibt.

2. Förderer mit angetriebenen Rollen nach Patentanspruch 1, dadurch gekennzeichnet, dass die aufgezapften Nabenkränze (6) in die einzelnen Rollen (11) eingesetzt sind, und dass wenigstens der dem Zahnkranz (1) am nächsten liegende Nabenkranz (66) einen Rand (61) aufweist, der in eine Position parallel zu dem Nabenkranz selbst gebogen ist mit der Aufgabe, den entsprechenden Endabschnitt (101) des Rohres und diesen direkt haltend abzudecken, und dadurch, dass der Aussendurchmesser des gebogenen Randes mit dem der Zahnkranznabe (15) übereinstimmt und der gebogene Rand selbst das zylindrische Element (61) bildet, um das die Schraubenfeder (3) gewunden ist.

3. Förderer mit angetriebenen Rollen nach Patentanspruch 2, dadurch gekennzeichnet, dass der aufgezapfte Nabenkranz (66) und das Rohr (10) einer einzelnen Rolle durch eine radiale Kupplungsfläche (8) miteinander verbunden sind.

4. Förderer mit angetriebenen Rollen nach Patentanspruch 3, dadurch gekennzeichnet, dass das von dem Zahnkranz am entferntesten liegende Ende (5) der Schraubenfeder (3) in einen von der aufgezapften Nabe (6) gebotenen Sitz greift.

5. Förderer mit angetriebenen Rollen nach Patentanspruch 1, dadurch gekennzeichnet, dass der zylindrische Endabschnitt des Rohres einen verringerten Durchmesser aufweist, auf den der Zahnkranz (1) und der gebogene Rand (61) des entsprechenden aufgezapften Nabenkranzes (66) aufgezogen ist.

6. Förderer mit angetriebenen Rollen nach Patentanspruch 1, dadurch gekennzeichnet, dass die einzelne Rolle (11) wenigstens eine Hülse (16) aufweist, die über eine radiale Kupplungsfläche mit einem Rohr von einem im wesentlichen konstanten Schnitt verbunden ist.

7. Förderer mit angetriebenen Rollen nach Patentanspruch 1, enthaltend wenigstens zwei in einem Winkel zueinander angeordnete Abschnitte, von denen alle Rollen (11) zylindrisch und von gleicher Länge sind, dadurch gekennzeichnet, dass jede Rolle in der Nähe des Verbindungspunktes zwischen den beiden unterschiedlich angeordneten Abschnitten aus einem Rohr (10) von im wesentlichen konstantem Schnitt besteht, sowie aus einer Anzahl von gekoppelten Hülsen (16), die den gleichen Aussendurchmesser aufweisen und mit dem Rohr über entsprechende radiale Kupplungsflächen verbunden sind.

8. Förderer mit angetriebenen Rollen nach Patentanspruch 7, dessen aufeinanderfolgende Abschnitte in einem Winkel von 90° oder ähnlich angeordnet sind, dadurch gekennzeichnet, dass der vorangehende von zwei so angeordneten Abschnitten über die gesamte Breite mit dem unmittelbar darauffolgenden verbunden ist.

9. Förderer mit angetriebenen Rollen nach Patentanspruch 7, dessen aufeinanderfolgende Abschnitte in einem Winkel zueinander angeordnet und durch eine Biegung miteinander verbunden sind, dadurch gekennzeichnet, dass alle Rollen einer solchen Biegung zylindrisch und von gleicher Länge sind und aus einem Rohr (10) von im wesentlichen gleichem Schnitt bestehen sowie aus einer Anzahl von gekoppelten Hülsen (16), die den gleichen Aussendurchmesser aufweisen und mit dem Rohr über entsprechende radiale Kupplungsflächen verbunden sind.

10. Förderer mit angetriebenen Rollen nach Patentanspruch 1, dadurch gekennzeichnet, dass die Manschette (4), welche die Wirkung der Schraubenfeder (3) einer jeden Rolle kontrolliert, mit wenigstens vier Zähnen (7) versehen ist.

11. Förderer mit angetriebenen Rollen nach Patentanspruch 1, dessen jede Haltestation mit einem Anschlagmechanismus (9) von grundsätzlich gleicher Länge wie die der Station selbst versehen ist, dadurch gekennzeichnet, dass der Anschlag als eine vertikal angeordnete Platte (91) ausgeformt ist, versehen mit vertikalen Sitzen (92) zur Aufnahme der Wellen (12) der einzelnen Rollen (11) und mit Abfangelementen (94 oder 95), welche die Zähne (7) der die Federn (3) steuernden Manschetten (4) greifen, wann immer der Mechanismus durch entsprechende Antriebsmittel (17) in die Position geschoben wird, in der der Rollenantrieb ausgeschaltet ist.

12. Förderer mit angetriebenen Rollen nach Patentanspruch 11, dadurch gekennzeichnet, dass die Abfangelemente des Anschlagmechanismus (9) an den Kanten von den Sitzen (94) vorgesehen sind, die sich in einem horizontalen Abschnitt (93) befinden, der durch das Biegen des oberen Abschnittes der vertikal angeordneten Platte (91) um 90° geschaffen wurde.

13. Förderer mit angetriebenen Rollen nach Patentanspruch 11, dadurch gekennzeichnet, dass die Abfangelemente des Anschlagmechanismus (9) die Form von Zapfen (95) haben, die aus der vertikal angeordneten Platte (91) herausragen.

14. Förderer mit angetriebenen Rollen nach Patentanspruch 1, dessen jede Haltestation mit einem Anschlagmechanismus (9) von einer grundsätzlich gleichen Länge wie die der Station selbst versehen ist, dadurch gekennzeichnet, dass der Anschlag aus einer vertikal angeordneten Platte (91) gebildet wird, versehen mit vertikalen und die Wellen (12) einer jeden Rolle (11) aufnehmenden Sitzen (92), sowie mit Abfangzapfen (95), welche die Zähne (7) der die Federn (3) kontrollierenden Manschetten (4) greifen, wann immer der Mechanismus durch entsprechende Antriebsmittel (17 oder 35, 34 und 33) in die Position versetzt wird, in der der Rollenantrieb ausgeschaltet ist, und dadurch, dass der Anschlagmechanismus (9) durch eine Rückholfeder (32) in der Position gehalten wird, in welcher der Rollenantrieb frei übertragen wird.

15. Förderer mit angetriebenen Rollen nach Patentanspruch 11 oder 14, dadurch gekennzeichnet, dass die auf einen jeden Anschlagmechanismus (9) wirkenden Antriebsmittel aus wenigstens einem Elektromagneten (17) bestehen, verriegelt mit der Steueranlage der Maschine, in welche der Förderer eingebaut ist.

16. Förderer mit angetriebenen Rollen nach Patentanspruch 11 oder 14, dadurch gekennzeichnet, dass die auf einen jeden Anschlagmechanismus (9) wirkenden Antriebsmittel aus wenigstens einem Elektromagneten (17) bestehen, verriegelt mit einem Wandler, der dazu bestimmt ist, das Vorhandensein in der Haltestation von einer zugeführten Ladung (24) festzustellen.

17. Förderer mit angetriebenen Rollen nach Patentanspruch 11 oder 14, dadurch gekennzeichnet, dass die auf einen jeden Anschlagmechanismus (9) wirkenden Antriebsmittel aus einem nach vorn in die Vorschubrichtung des Förderers gerichteten Hebel (35) bestehen, scharnierartig an eine Zugstange (34) angelenkt, die über eine Feder (33) mit der vertikal angeordneten Platte (91) verbunden ist, und dadurch, dass das obere Ende (351) eines solchen Hebels gebogen ist und oben zwischen zwei Rollen (11) herausragt, wobei er die Haltestation unmittelbar im Anschluss an die bildet, die der Anschlagmechanismus (9) steuert.

18. Förderer mit angetriebenen Rollen nach Patentanspruch 2, dadurch gekennzeichnet, dass der aufgezapfte Nabenkranz (66) einer jeden Rolle (11) auf dem verringerten Endabschnitt (101) des Rohres (10) durch Binde- oder Klebemittel befestigt ist.

19. Förderer mit angetriebenen Rollen nach Patentanspruch 2, dadurch gekennzeichnet, dass der aufgezapfte Nabenkranz (66) einer jeden Rolle (11) auf dem verringerten Endabschnitt (101) des Rohres durch einen Keil oder anderes Mittel befestigt ist.

## Revendications

1. Convoyeur avec des rouleaux entraînés pour des chemins d'alimentation avec des stations d'arrêt, chacun de ces rouleaux (11) comportant un arbre (12), un tube cylindrique (10) coiffant l'arbre et relié à celui-ci au moyen de bossages de support (6) logeant des paliers (13) et une roue à rochet (1) enfilée sur l'une des extrémités du tube et mise en rotation par une chaîne entraînée (18), caractérisé en ce que chaque rouleau est pourvu d'un ressort hélicoïdal de prise (3) coiffant tant le moyeu (15) de la roue à rochet qu'un élément cylindrique (61) de diamètre égal à celui du moyeu et solidarisé en rotation avec le tube et avec une douille (4) coiffant le ressort et commandant son fonctionnement, laquelle est pourvue d'au moins une dent orientée vers la direction de rotation de la roue à rochet et présente une rainure dans laquelle l'une des extrémités (2) du ressort peut être logée;

en ce que la roue à rochet est susceptible de tourner librement par rapport au tube et le ressort hélicoïdal est enroulé dans la direction de rotation de la roue à rochet (1) de sorte que la rotation de la roue à rochet et de la douille (4) engagera le ressort;

et en ce qu'il comporte un arrêt (9) qui, quand actionné, se déplace d'une position à l'extérieur de la trajectoire décrite par les dents (7) de la douille (4) à une position, dans la même trajectoire, susceptible de permettre le dégagement du ressort (3).

2. Convoyeur avec des rouleaux entraînés selon la revendication 1, caractérisé en ce que les bossages de support (6) sont introduits dans chaque rouleau individuel (11) et au moins le bossage (66) le plus proche de la roue à rochet (1) est pourvu d'un rebord (61) replié en position parallèle au bossage lui-même, dans le but de coiffer avec contact la portion extrême relative (101) du tube, et en ce que le diamètre extérieur du rebord replié épouse celui du moyeu (15) de la roue à rochet et le rebord replié lui-même constitue l'élément cylindrique (61) autour duquel est enroulé le ressort hélicoïdal de prise (3).

3. Convoyeur avec des rouleaux entraînés selon la revendication 2, caractérisé en ce que le bossage de support (66) et le tube (10) de chaque rouleau sont couplés au moyen de surfaces radiales de frottement (8).

4. Convoyeur avec des rouleaux entraînés selon la revendication 3, caractérisé en ce que l'extrémité (5) du ressort hélicoïdal de prise (3) la plus éloignée de la roue à rochet s'engage dans une rainure présentée par le bossage de support (6).

5. Convoyeur avec des rouleaux entraînés selon la revendication 1, caractérisé en ce que la portion cylindrique d'extrémité du tube, qui présente un diamètre effilé, est celle coiffée par la roue à rochet (1) et par le rebord replié (61) du respectif bossage de support (66).

6. Convoyeur avec des rouleaux entraînés selon la revendication 1, caractérisé en ce que chaque rouleau (11) comporte au moins un manchon (16) de transport qui est couplé à un tube (10) de section sensiblement constante au moyen de surfaces radiales de frottement.

7. Convoyeur avec des rouleaux entraînés selon la revendication 1, comportant au moins deux portions disposées de manière à former un angle l'une par rapport à l'autre, où tous les rouleaux sont cylindriques et ont la même longueur, caractérisé en ce que chaque rouleau à proximité de la jonction entre les deux portions disposées en angle se compose d'un tube (10) de section sensiblement constante et d'une pluralité de manchons (16) de transport lesquels ont un diamètre extérieur identique et coiffent le tube avec contact au moyen de respectives surfaces radiales de frottement.

8. Convoyeur avec des rouleaux entraînés selon la revendication 7, dont les portions consécutives sont disposées à former un angle d'environ 90°, caractérisé en ce que celle des deux portions ainsi disposées qui se trouve à l'amont est reliée sur toute sa largeur à la portion immédiatement à l'aval.

9. Convoyeur avec des rouleaux entraînés selon la revendication 7, dont les portions consécutives sont disposées à former un angle et reliées entre elles par une portion courbée, caractérisé en ce que tous les rouleaux (11) de ladite portion courbée sont cylindriques et de la même longueur et se composent d'un tube (10) de section sensiblement constante et d'une pluralité de manchons (16) de transport ayant tous le même diamètre extérieur et coiffant le tube avec contact au moyen de respectives surfaces radiales de frottement.

10. Convoyeur avec des rouleaux entraînés selon la revendication 1, caractérisé en ce que ladite douille (4) qui commande le fonctionnement du ressort hélicoïdal de prise (3) de chaque rouleau est pourvue d'au moins quatre dents (7).

11. Convoyeur avec des rouleaux entraînés selon la revendication 1, où chacune des ses stations d'arrêt est munie d'un mécanisme d'arrêt (9) de longueur sensiblement égale à celle de la station elle-même, caractérisé en ce que l'arrêt ou cliquet est formé d'une plaque (91) disposée verticalement, pourvue d'entailles verticales (92) logeant les arbres (12) de chaque rouleau individuel (11) et d'éléments d'accrochage (94 ou 95) qui engagent les dents (7) des douilles (4) qui commandent les ressorts (3) chaque fois que le mécanisme est déplacé par des moyens d'actionnement appropriés (17) à la position dans laquelle la commande du rouleau est débrayée.

12. Convoyeur avec des rouleaux entraînés selon la revendication 11, caractérisé en ce que les éléments d'accrochage du mécanisme d'arrêt (9) sont représentés par les bords des rainures (94) localisées dans un profilé horizontal (93) formé en repliant de 90° le profilé vertical de la plaque (91) disposée verticalement.

13. Convoyeur avec des rouleaux entraînés selon la revendication 11, caractérisé en ce que lesdits éléments d'accrochage du mécanisme d'arrêt (9) sont en forme de chevilles (95) faisant saillie de la plaque (91) disposée verticalement.

14. Convoyeur avec des rouleaux entraînés selon la revendication 1, où chacune desdites stations d'arrêt est munie d'un mécanisme d'arrêt (9) de longueur sensiblement égale à celle de la station elle-même, caractérisé en ce que l'arrêt est concrétisé et par une plaque disposée verticalement (91) pourvue d'entailles verticales (92) logeant les arbres (12) de chaque rouleau individuel (11) et de chevilles d'accrochage (95) engageant les dents (7) des douilles (4) qui commandent les ressorts (3) chaque fois que le mécanisme est déplacé par des moyens d'actionnement appropriés (17 ou 35, 34 et 33) à la position dans laquelle la commande du rouleau est débrayée et en ce que le mécanisme d'arrêt (9) est poussé par un ressort de retenue (32) dans la position à laquelle la commande du rouleau est librement transmise.

15. Convoyeur avec des rouleaux entraînés selon la revendication 11 ou 14, caractérisé en ce que les moyens d'actionnement qui causent le fonctionnement de chaque mécanisme d'arrêt (9) se composent d'au moins un électro-aimant (17) asservi à l'appareillage de commande de la machine avec laquelle le convoyeur forme un tout.

16. Convoyeur avec des rouleaux entraînés selon la revendication 11 ou 14, caractérisé en ce que les moyens d'actionnement qui causent le fonctionnement de chaque mécanisme d'arrêt (9) se composent d'au moins un électro-aimant (17) asservi à un transducteur destiné à détecter la présence d'une charge (24) à proximité de la station d'arrêt.

17. Convoyeur avec des rouleaux entraînés selon la revendication 11 ou 14, caractérisé en ce que les moyens d'actionnement qui causent le fonctionnement de chaque mécanisme d'arrêt (9) se composent d'un levier (35) incliné selon la direction de mouvement du convoyeur et attaché à pivotement à une entretoise (34) qui est reliée au moyen d'un ressort (33) à la plaque (91) disposée verticalement et en ce que l'extrémité supérieure (351) dudit levier est recourbée et déborde vers le haut entre deux desdits rouleaux (11) qui occupent la station d'arrêt immédiatement à l'aval de celle qui est pourvue dudit mécanisme d'arrêt (9).

18. Convoyeur avec des rouleaux entraînés selon la revendication 1, caractérisé en ce que le bossage de support (66) de chaque rouleau (11) est attaché à la portion d'extrémité effilée (101) du tube (10) au moyen d'une colle ciment ou d'un compound collant.

19. Convoyeur avec des rouleaux entraînés selon la revendication 2, caractérisé en ce que le bossage de support (66) de chaque rouleau (11) est attaché à la portion d'extrémité effilée (101) du tube (10) au moyen d'un assemblage à clavette ou similaire.

# FIG 4

# FIG 2

# FIG 1

# FIG 3

# FIG 5

FIG8

FIG7

FIG6

EP 0 213 086 B1